# EUROPEAN PATENT SPECIFICATION

(11) **EP 1 619 017 B1**
(45) Date of publication and mention of the grant of the patent: **06.02.2008**
(21) Application number: 05076514.8
(22) Date of filing: 01.07.2005
(51) Int. Cl.: B32B 3/26, E04B 1/76

(54) **Membrane and building construction**
Membran und Baukonstruktion
Membrane et structure de bâtiment

(30) Priority: 23.07.2004 GB 0416417
(43) Date of publication of application: 25.01.2006
(73) Proprietor: Yorkshire Building Services (Whitwell) Ltd, Creswell, Derbyshire S80 4AJ (GB)
(72) Inventor: Taylor, Carl Steven, Sheffield S7 2LJ (GB)
(74) Representative: Long, Edward Anthony

(56) References cited:
- WO-A-01/43972
- WO-A-98/10216
- GB-A- 2 367 839
- US-A- 4 340 634

## Description

### Field of the Invention

This invention relates to a membrane for use in building construction, and to a building construction incorporating same.

### Background of the Invention

In the construction of buildings, particularly housing, there is a requirement for thermal insulation meeting building regulation requirements particularly in a cavity wall, especially in timber frame or modular housing. Such membranes require breathability to achieve condensation dispersal but have achieved this only to a limited extent. One such membrane proposal that is currently in use is described in GB 2367839, characterised in that membrane sheets are provided in two layers, being aluminium foil bonded to a sheet of synthetic plastics material provided with an array of air pockets or bubbles, with the installation, as taught in GB 2367839, involving the overlapping of adjacent edges of adjacent sheets to provide a non-sealed, open, breathable lap joint.

This membrane has a thickness of approximately 4mm and consequently a single, overlapped joint has a thickness of at least 8mm. Furthermore, multiple overlaps are sometimes effected, resulting in 12mm or 16mm thickness, which on occasion is difficult to accommodate within the space provided.

In GB 2367839 is described a membrane comprising an aluminium foil bonded to a planar side of a plastics sheet having an outer layer comprising a plurality of closed air pockets or bubbles, the spaces between the bubbles constituting a tortuous air path particularly for water vapour flow.

WO 98/10216 and WO/43972 describe other thermal insulation membrane with bubble sheets.

US 4340634 describes a wallpaper with, in Figure 2, a sinuous web sandwiched between inner and outer layers of a carrier and a metal.

### Object of the Invention

A basic object of the invention is the provision of an improved thermal insulation/breather/venting membrane and building construction.

### Summary of a First Aspect of the Invention

According to a first aspect of the invention there is provided a thermal insulation/breather/venting membrane for use in building construction comprising:
(i) a sheet of reflective material having an outer surface and an inner surface;
(ii) a coating applied to the outer surface of the reflective material to prevent, or restrict, oxidation; and
(iii) a sheet of synthetic plastics material consisting of two layers, being an inner, planar layer bonded to an outer layer, the sheets of plastics material being bonded by its planar, inner layer to the inner surface of the reflective material, and the outer layer of the sheet of plastics material being deformed to define a plurality of embossed elongated air channels.

### Advantage(s) of the First Aspect

The membrane in accordance with the first aspect, like that of GB 2367839, provides increased breathability, whilst retaining the characteristics of being waterproof, being of increased U-value without increased wall thickness, being fire retardant, being CFC/HCFC free, and being certified for building regulations, and can be produced in thicknesses less than 4mm, to minimise thickness accumulations at overlaps.

### Summary of the Second Aspect of the Invention

According to a second aspect of the invention, there is provided a building construction, particularly for housing, comprising:
(i) an outer skin e.g. of brickwork, blockwork, close boarding, tiles, or cladding material;
(ii) an inner skin e.g. of timber or steel frame;
(iii) a cavity between (i) and (ii); and
(iv) sheets of membrane in accordance with the first aspect located in the cavity and secured to the inner skin such that at least adjacent horizontal edges of adjacent sheets of membrane are overlapped, with lower edges of an upper sheet overlapping upper edges of lower sheets to provide a non-sealed, open, breathable lap joint.

The use of (iv), as with GB 2367839, results in ready escape of moisture into the cavity due to the increased breathability by the use of exposed air channels.

### Preferred or Optional Features

The reflective material is aluminium foil.

The reflective material is a metallised polyester.

In one air channel embodiment, the air channels extend vertically.

In another air channel embodiment, the air channels extend horizontally.

In the air channels embodiment, the channels are fully exposed to atmosphere at edges of the membrane.

The air channels project as ridges or ribs, away from the inner, planar layer of the synthetic plastics material, so that in use, they may be engaged with the inner skin to space the membrane from the inner skin.

Vertical edges of adjacent sheets of membrane are overlapped.

An inner face of the inner skin is provided with a lining e.g. of plywood sheets, to which lining the sheets of membrane are attached.

### Summary of a Third Aspect of the Invention

A third aspect of the invention relates to the use of a membrane in accordance with the first aspect as a thermal insulation/breather/venting membrane in a cavity between inner and outer skins of a building, with at least one unrestricted flow path for air and/or water vapour around overlapped edges of adjacent membranes.

### Brief Description of the Drawings

The invention will now be described in greater detail, by way of examples, with reference to the accompanying drawings, in which:
Figure 1 is an exploded plan view of a membrane in accordance with the first aspect of the invention;
Figure 2 is a plan view of the membrane of Figure 1 installed in a cavity between inner and outer wall skins of a building construction in accordance with the second aspect of the invention;

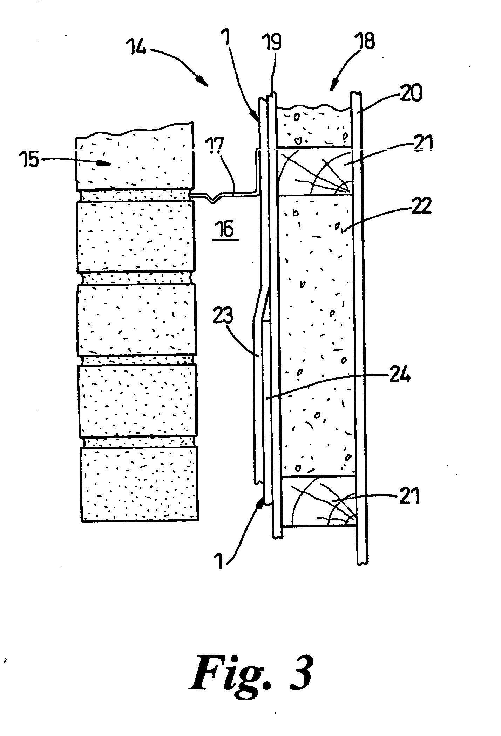

Figure 3 is a view (not to scale) in the direction of arrow A of Figure 2, and
Figures 4A, 4B and 4C illustrate three alternative installations of the membrane of Figure 1 in a roof of a building.

In the drawings, a membrane 1 in accordance with the first aspect of the invention comprises a sheet of aluminium foil 2 having an outer surface 3 and an inner surface 4. To the outer surface 3 is applied a coating 5 to prevent, or restrict, oxidation of that surface.

A sheet 6 of synthetic plastics material comprises an inner, planar layer 7 bonded to an outer layer 8, and the sheet 6 is bonded by its inner layer 7 to the inner surface 4 of the aluminium foil 2.

The outer layer 8 is non-planar, being deformed to define a plurality of elongated air channels 9 in the form of corrugations, with peaks, ridges, or ribs 10 etc projecting away from the inner planar layer 7, and with troughs 11 by which the layer 8 is attached to layer 7. The channels 9 have open ends 12 at side edges 13 of the membrane 1.

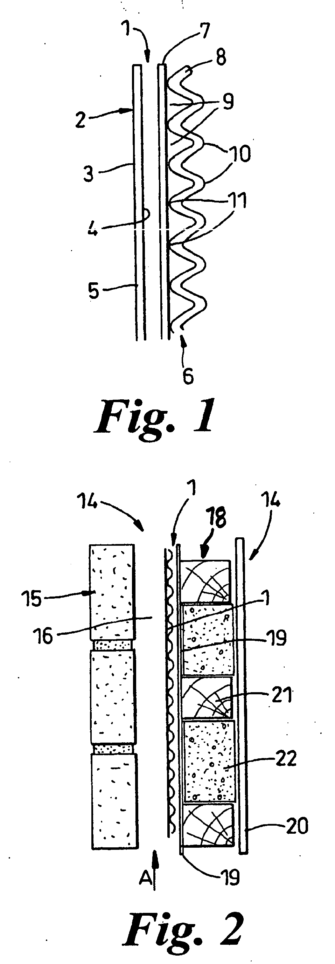

In the building construction 14 illustrated in Figure 1 and Figure 2 that is in accordance with the second aspect of the invention, an outer brickwork skin is illustrated at 15, a cavity at 16, a wall tie at 17, and an inner skin at 18, the latter comprising spaced apart timber sheeting 19 and 20 with spacing timber studwork 21 and thermal insulation blocks or strips 22 located between the sheeting 19, which consists of OSB board, and sheeting 20 which consists of plasterboard with a vapour control layer.

The membrane 1 is supplied, on site, in roll form, and clearly needs to be of width and roll diameter that can be readily transported and handled and hence is typically 6 foot (2m) width 18 inches (45 cm) diameter. It follows, that during installation in the cavity 16, adjacent lateral and vertical edges of adjacent rolls need to be overlapped e.g. by 6 inches (15 cm) to ensure continuity of cover of the inner skin 18 by the membrane 1. Similarly as shown in Figure 2, a lower horizontal edge 23 of an upper membrane 1 needs to be overlapped with an upper horizontal edge 24 of a lower membrane 1, again to ensure continuity of cover of the inner skin 18 by the membrane 1, and to form a non-sealed, open, breathable lap joint 25.

For purposes of illustration, Figure 2 illustrates the membrane 1, slightly spaced from the inner skin 18 and specifically before the fluted channels 9 are brought into contact with, the sheeting 19, so that the air channels project e.g. as ridges, ribs, flutes etc space the membrane 1 from the sheeting 19.

Although, in Figures 1 and 2, the elongated air channels 9 are indicated as extending vertically, they could extend horizontally.

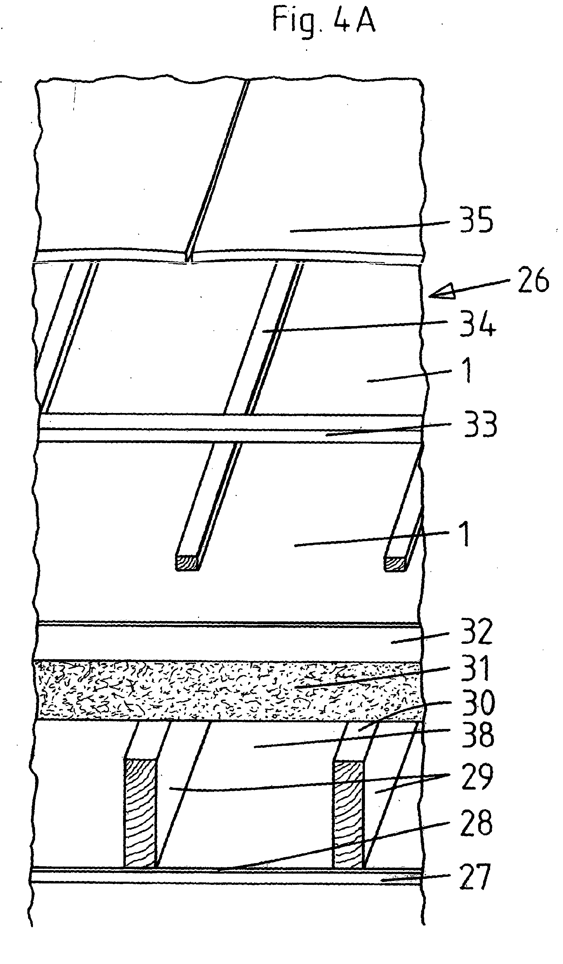

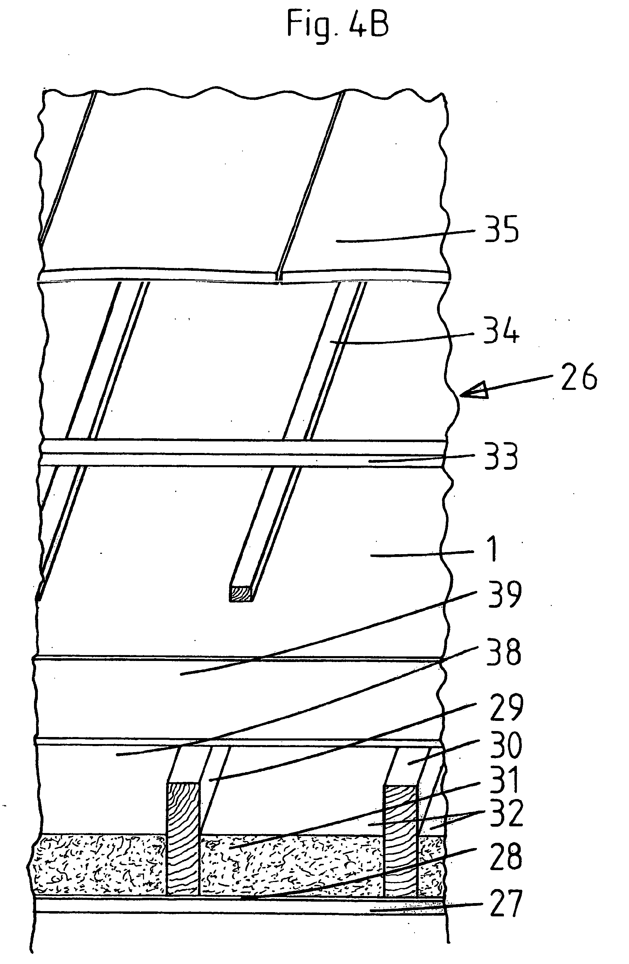

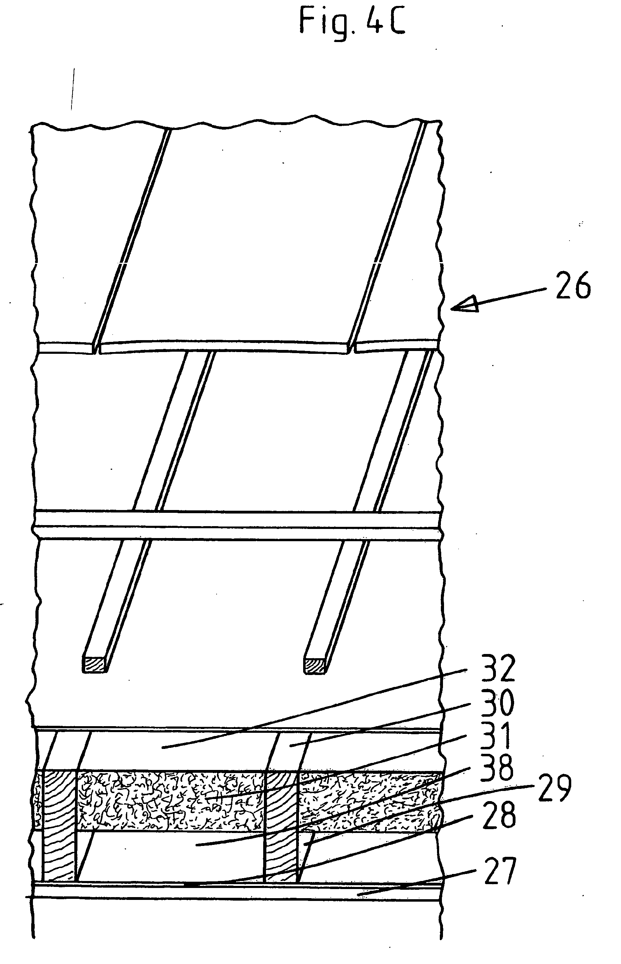

In Figures 4A, 4B and 4C, a roof construction 26 can be seen to consist of plaster boards 27 on top of which is located a vapour barrier layer 28, above which are a plurality of spaced-apart rafters 29 having upper surfaces 30.

In the embodiment of Figure 4A, across the upper surface 30 of each rafter 29 is laid a suitably thick layer of thermal insulation 31 on to the upper surface 32 of which insulation 31 is laid membrane 1 of Figure 1. The membrane 1 of Figure 1 is supplied in roll form and, as with cavity wall insulation, adjacent edges of adjacent rolls are overlapped to provide non-sealed, open, breathable lap joints (not shown). On top of the foil 1 are applied tile battens 33 and counter battens 34 to which are fitted roof tiies 35.

In the embodiment of Figure 4B, the insulation 31 is provided in strip form and is laid between adjacent rafters 29 with upper surfaces 32 of the insulation 31 substantially below the upper surfaces 30 of the rafters 29, so that lower surface 36 of the insulation 31 is contiguous with lower surface 37 of each rafter 29, with the vapour barrier layer 28 provided across the contiguous surfaces and a cavity 38 is formed between adjacent rafters by the fitting of sarking boards 39 applied across upper surfaces 30 of the rafters 29, with rolls of membrane 1 laid on the sarking boards 39.

In the embodiment of Figure 4C upper surfaces 32 of the insulation 31 are contiguous with upper surfaces 30 of the rafters 29, so that the rolls of membrane 1 are laid across these contiguous surfaces, and cavities 38 are defined between adjacent rafters 29 and also between the underside of the insulation 31 and the upper side of the plasterboard 27.

## Claims

1. A thermal insulation/breather/venting membrane for use in building construction comprising a sheet of reflective material having an outer surface and an inner surface; a coating applied to the outer surface of the reflective material to prevent, or restrict, oxidation; and a multi-layer sheet of material including an inner, planar layer bonded to the inner surface of the reflective material; **characterised in that** an outer layer (8) of the sheet (6) of material is deformed to define a plurality of embossed, elongated air channels (9).

2. A membrane as claimed in Claim 1, **characterised in that** the reflective material is aluminium foil (2).

3. A membrane as claimed in Claim 1, **characterised in that** the reflective material is a metallised polyester.

4. A membrane as claimed in any preceding claim, **characterised in that** the multi-layer sheet (6) is a two-layer sheet.

5. A membrane as claimed in any preceding claim, **characterised in that** the multi-layer sheet (6) has at least one layer (7 and/or 8) of synthetic plastics material.

6. A membrane as claimed in any one of Claims 1 to 4, **characterised in that** the multi-layer sheet (6) has at least one layer of a non-woven textile.

7. A membrane as claimed in any preceding claim, **characterised in that** the multi-laye sheet (6) is flexible, so that the membrane may be produced as a roll for storage, transport and at installation.

8. A membrane as claimed in any preceding claim, **characterised in that** elongated air pockets or air channels (9) extend vertically, or alternatively, horizontally, with respect to the membrane.

9. A membrane as claimed in any preceding claim, with air channels, **characterised in that** the channels (9) are fully exposed to atmosphere at edges of the membrane (1).

10. A membrane as claimed in Claim 9, **characterised in that** the air channels (9) project as ridges or ribs (10), away from the inner, planar layer (7) of the sheet (6).

11. A membrane as claimed in any preceding claim, **characterised in that** a layer of reinforcement is applied to one surface of the reflective material (2).

12. A membrane as claimed in Claim 11, **characterised in that** the coating (5) is applied to the inner surface (4) of the reflective material (2), adjacent the sheet (6).

13. A membrane as claimed in Claim 11 or Claim 12, **characterised in that** the reinforcement is a grid.

14. A membrane as claimed in any one of Claims 11 to 13, **characterised in that** the reinforcement is of synthetic plastic fibres or strands.

15. A building construction, particularly for housing, comprising:
(i) an outer skin e.g. of brickwork, blockwork, close boarding, tiles, or cladding material;
(ii) an inner skin e.g. of timber or steel frame; and
(iii) a cavity between (i) and (ii); **characterised in that**
(iv) sheets of membrane (1) in accordance with any one of Claims 1-14, are located in the cavity (16) and secured to the inner skin (18) such that at least adjacent horizontal edges (23, 24) of adjacent sheets of membrane (1) are overlapped, with lower edges (23) of an upper sheet overlapping upper edges (24) of lower sheets to provide a non-sealed, open, breathable lap joint(s) (25).

16. A building construction as claimed in Claim 15, **characterised in that** vertical edges of adjacent sheets of membrane (1) are overlapped.

17. A building construction as claimed in Claim 15 or Claim 16, **characterised in that** an inner face of the inner skin is provided with a lining (19), to which lining (19) the sheets of membrane (1) are attached.

18. The use of a membrane in accordance with any one of Claims 1 to 14, as a thermal insulation/breather/venting membrane (1) in a cavity (16) between inner and outer skins (18, 15) of a building (14), with at least one unrestricted flow path for air and/or water vapour around overlapped edges (23, 24) of adjacent membranes (1).

19. A building construction, particularly for housing, comprising:
(i) a plurality of rafters; and
(ii) thermal insulation mounted either across the tops of the rafters or in between and adjacent rafters; **characterised in that**
(iii) sheets of membrane (1) in accordance with any one of Claims 1 to 14 are located between the thermal insulation and conventionally provided tile battens and counter battens, such that at least adjacent horizontal edges (23, 24) of adjacent sheets of membrane (1) are overlapped, with lower edges (23) of an upper sheet overlapping upper edges (24) of lower sheets to provide a non-sealed, open, breathable lap joint(s).

20. A building construction as claimed in Claim 19, **characterised in that** the thermal insulation is relatively rigid, is mounted across the tops of the rafters, and the membrane (1) is laid on the exposed upper surface of the insulation.

21. A building construction as claimed in Claim 19, **characterised in that** the thermal insulation is mounted between adjacent rafters, and below the tops of the rafters, with sheets of sarking board then applied across the tops of the rafters, and the membrane (1) is laid on the exposed upper surface of the sarking board.

22. A building construction as claimed in Claim 19, **characterised in that** the thermal insulation is mounted between adjacent rafters, and contiguous with the tops of the rafters, and the membrane (1) is laid on the exposed upper surface of the rafters and the insulation.

23. The use of a membrane in accordance with any one of Claims 1 to 14 as a thermal insulation/breather/venting membrane in a roofing construction, with at least one unrestricted flow path for air and/or water vapour around overlapped edges (23, 24) of adjacent membranes (1).

## Patentansprüche

1. Wärmeisolierungs/Atmungs/Lüftungsmembran zur Verwendung bei der Baukonstruktion, umfassend eine Bahn eines reflektierenden Materials mit einer Außenfläche und einer Innenfläche; eine Beschichtung, die auf die Außenfläche des reflektierenden Materials aufgebracht ist, um eine Oxidation zu verhindern oder zu beschränken; und eine mehrschichtige Bahn eines Materials einschließlich einer inneren flachen Schicht, die an die Innenfläche des reflektierenden Materials gebunden ist; **dadurch gekennzeichnet, dass** eine Außenschicht (8) der Bahn (6) des Materials verformt ist, um mehrere geprägte, längliche Luftkanäle (9) zu bilden.

2. Membran nach Anspruch 1, **dadurch gekennzeichnet, dass** das reflektierende Material Aluminiumfolie (2) ist.

3. Membran nach Anspruch 1, **dadurch gekennzeichnet, dass** das reflektierende Material ein metallisierter Polyester ist.

4. Membran nach einem der vorhergehenden Ansprüche, **dadurch gekennzeichnet, dass** die mehrschichtige Bahn (6) eine zweischichtige Bahn ist.

5. Membran nach einem der vorhergehenden Ansprüche, **dadurch gekennzeichnet, dass** die mehrschichtige Bahn (6) zumindest eine Schicht (7 und/oder 8) eines Kunststoffmaterials aufweist.

6. Membran nach einem der Ansprüche 1 bis 4, **dadurch gekennzeichnet, dass** die mehrschichtige Bahn (6) zumindest eine Schicht eines Textilvliesstoffs aufweist.

7. Membran nach einem der vorhergehenden Ansprüche, **dadurch gekennzeichnet, dass** die mehrschichtige Bahn (6) biegsam ist, so dass die Membran für die Lagerung, den Transport und bei der Anbringung als eine Rolle hergestellt werden kann.

8. Membran nach einem der vorhergehenden Ansprüche, **dadurch gekennzeichnet, dass** sich längliche Lufttaschen oder Luftkanäle (9) senkrecht, oder alternativ, waagerecht in Bezug auf die Membran erstrecken.

9. Membran nach einem der vorhergehenden Ansprüche, mit Luftkanälen, **dadurch gekennzeichnet, dass** die Kanäle an Rändern der Membran (1) vollständig der Atmosphäre ausgesetzt sind.

10. Membran nach Anspruch 9, **dadurch gekennzeichnet, dass** die Luftkanäle (9) als Grate oder Rippen (10) von der inneren, flachen Schicht (7) der Bahn (6) vorspringen.

11. Membran nach einem der vorhergehenden Ansprüche, **dadurch gekennzeichnet, dass** eine Schicht einer Verstärkung auf eine Fläche des reflektierenden Materials (2) aufgebracht ist.

12. Membran nach Anspruch 11, **dadurch gekennzeichnet, dass** die Beschichtung (5) neben der Bahn (6) auf die Innenfläche (4) des reflektierenden Materials (2) aufgebracht ist.

13. Membran nach Anspruch 11 oder Anspruch 12, **dadurch gekennzeichnet, dass** die Verstärkung ein Gitter ist.

14. Membran nach einem der Ansprüche 11 bis 13, **dadurch gekennzeichnet, dass** die Verstärkung aus Kunststofffasern oder -strängen besteht.

15. Baukonstruktion, insbesondere für den Wohnbau, umfassend:
(i) eine Außenhaut, z.B. aus Mauerwerk, Betonsteinen, einer dichten Verschalung, Fliesen oder einem Fassadenmaterial;
(ii) eine Innenhaut, z.B. aus einem Bauholz- oder Stahlrahmen; und
(iii) einen Hohlraum zwischen (i) und (ii); **dadurch gekennzeichnet, dass** sich
(iv) Bahnen der Membran nach einem der Ansprüche 1 bis 14 im Hohlraum (16) befinden und derart an der Innenhaut (18) angebracht sind, dass zumindest benachbarte waagerechte Ränder (23, 24) von benachbarten Bahnen der Membran (1) überlappt sind, wobei untere Ränder (23) einer oberen Bahn obere Ränder (24) von unteren Bahnen überlappen, um (eine) nicht abgedichtete, offene, atmungsaktive Überlappungsverbindung(en) (25) bereitzustellen.

16. Baukonstruktion nach Anspruch 15, **dadurch gekennzeichnet, dass** senkrechte Ränder von benachbarten Bahnen der Membran (1) überlappt sind.

17. Baukonstruktion nach Anspruch 15 oder Anspruch 16, **dadurch gekennzeichnet, dass** eine Innenfläche der Innenhaut mit einer Verkleidung (19) versehen ist, an welcher Verkleidung (19) die Bahnen der Membran (1) angebracht sind.

18. Verwendung einer Membran nach einem der Ansprüche 1 bis 14 als Wärmeisolierungs/Atmungs/Lüftungsmembran (1) in einem Hohlraum (16) zwischen einer Innen- und einer Außenhaut (18, 15) eines Gebäudes (14), mit zumindest einem unbeschränkten Fließweg für Luft und/oder Wasserdampf um überlappte Ränder (23, 24) von benachbarten Membranen (1).

19. Baukonstruktion, insbesondere für den Wohnbau, umfassend:
(i) mehrere Sparren; und
(ii) eine Wärmeisolierung, die entweder über die Oberseiten der Sparren oder zwischen und neben den Sparren angebracht ist, **dadurch gekennzeichnet, dass** sich
(iii) Bahnen der Membran (1) nach einem der Ansprüche 1 bis 14 zwischen der Wärmeisolierung und herkömmlich bereitgestellten Latten und Gegenlatten befindet, so dass zumindest benachbarte waagerechte Ränder (23, 24) von benachbarten Bahnen der Membran (1) überlappt sind, wobei untere Ränder (23) einer oberen Bahn obere Ränder (24) von unteren Bahnen überlappen, um (eine) nicht abgedichtete, offene, atmungsaktive Überlappungsverbindung(en) bereitzustellen.

20. Baukonstruktion nach Anspruch 19, **dadurch gekennzeichnet, dass** die Wärmeisolierung verhältnismäßig starr ist, über die Oberseiten der Sparren angebracht ist, und die Membran (1) auf die freiliegende obere Fläche der Isolierung gelegt ist.

21. Baukonstruktion nach Anspruch 19, **dadurch gekennzeichnet, dass** die Wärmeisolierung zwischen benachbarten Sparren und unter den Oberseiten der Sparren angebracht ist, wobei dann Bahnen von Unterspannplatten über die Oberseiten der Sparren aufgebracht sind und die Membran (1) auf die freiliegende obere Fläche der Unterspannplatte gelegt ist.

22. Baukonstruktion nach Anspruch 19, **dadurch gekennzeichnet, dass** die Wärmeisolierung zwischen benachbarten Sparren und an die Oberseiten der Sparren angrenzend angebracht ist, und die Membran (1) auf die freiliegende obere Fläche der Sparren und der Isolierung gelegt ist.

23. Verwendung einer Membran nach einem der Ansprüche 1 bis 14 als Wärmeisolierungs/Atmungs/Lüftungsmembran bei der Dachkonstruktion, mit zumindest einem unbeschränkten Fließweg für Luft und/oder Wasserdampf um überlappte Ränder (23, 24) von benachbarten Membranen (1).

## Revendications

1. Membrane d'isolation thermique/de prise d'air/d'aération destinée à être utilisée dans une structure de bâtiment, comprenant une feuille de matériau réfléchissant ayant une surface externe et une surface interne ; un revêtement appliqué sur la surface externe du matériau réfléchissant pour empêcher ou limiter l'oxydation ; et une feuille de matériau à plusieurs couches comprenant une couche interne plane reliée à la surface interne du matériau réfléchissant ; **caractérisée en ce qu'**une couche externe (8) de la feuille (6) de matériau est déformée pour définir une pluralité de canaux d'air allongés, en relief (9).

2. Membrane selon la revendication 1, **caractérisée en ce que** le matériau réfléchissant est une feuille d'aluminium (2).

3. Membrane selon la revendication 1, **caractérisée en ce que** le matériau réfléchissant est un polyester métallisé.

4. Membrane selon l'une quelconque des revendications précédentes, **caractérisée en ce que** la feuille à plusieurs couches (6) est une feuille à deux couches.

5. Membrane selon l'une quelconque des revendications précédentes, **caractérisée en ce que** la feuille à plusieurs couches (6) a au moins une couche (7 et/ou 8) en matière plastique synthétique.

6. Membrane selon l'une quelconque des revendications 1 à 4, **caractérisée en ce que** la feuille à plusieurs couches (6) a au moins une couche en textile non tissée.

7. Membrane selon l'une quelconque des revendications précédentes, **caractérisée en ce que** la feuille à plusieurs couches (6) est flexible, de sorte que la membrane peut être produite sous forme de rouleau pour le stockage, le transport et/ou lors de l'installation.

8. Membrane selon l'une quelconque des revendications précédentes, **caractérisée en ce que** des poches d'air ou canaux d'air allongés (9) s'étendent verticalement, ou en variante horizontalement, par rapport à la membrane.

9. Membrane selon l'une quelconque des revendications précédentes, avec des canaux d'air, **caractérisée en ce que** les canaux (9) sont complètement exposés à l'atmosphère au niveau des bords de la membrane (1).

10. Membrane selon la revendication 9, **caractérisée en ce que** les canaux d'air (9) font saillie sous forme de crêtes ou nervures (10), à distance de la couche plane interne (7) de la feuille (6).

11. Membrane selon l'une quelconque des revendications précédentes, **caractérisée en ce qu'**une couche de renforcement est appliquée sur une surface du matériau réfléchissant (2).

12. Membrane selon la revendication 11, **caractérisée en ce que** le revêtement (5) est appliqué sur la surface interne (4) du matériau réfléchissant (2), adjacent à la feuille (6).

13. Membrane selon la revendication 11 ou la revendication 12, **caractérisée en ce que** le renforcement est une grille.

14. Membrane selon l'une quelconque des revendications 11 à 13, **caractérisée en ce que** le renforcement est en fibres ou brins de plastique synthétique.

15. Structure de bâtiment, en particulier pour une maison, comprenant :
(i) un revêtement externe par exemple en brique, en parpaing, en planchéiage, en tuiles ou en matériau de parement ;
(ii) un revêtement interne par exemple avec un châssis en bois ou en acier ; et
(iii) une cavité entre (i) et (ii) ; **caractérisée en ce que**:
(iv) des feuilles de membrane (1) selon l'une quelconque des revendications 1 à 14, sont positionnées dans la cavité (16) et fixées sur le revêtement interne (18) de sorte qu'au moins les bords horizontaux adjacents (23, 24) des feuilles de membrane (1) adjacentes sont superposés avec les bords inférieurs (23) d'une feuille supérieure recouvrant les bords supérieurs (24) des feuilles inférieures pour fournir un (des) joint (s) par recouvrement perméable(s) à l'air, ouvert(s), non étanche(s) (25).

16. Structure de bâtiment selon la revendication 15, **caractérisée en ce que** les bords verticaux des feuilles de membrane (1) adjacentes sont superposés.

17. Structure de bâtiment selon la revendication 15 ou la revendication 16, **caractérisée en ce qu'**une face interne du revêtement interne est dotée d'un doublage (19), sur lequel doublage (19), les feuilles de membrane (1) sont fixées.

18. Utilisation d'une membrane selon l'une quelconque des revendications 1 à 14, en tant que membrane d'isolation thermique/ de prise d'air/d'aération (1) dans une cavité (16) entre des revêtements internes et externes (18, 15) d'un bâtiment (14), avec au moins un passage d'écoulement pour l'air et/ou la vapeur d'eau non limité autour des bords superposés (23, 24) des membranes (1) adjacentes.

19. Structure de bâtiment, en particulier pour une maison, comprenant :
(i) une pluralité de chevrons ; et
(ii) une isolation thermique montée sur les parties supérieures des chevrons ou entre des chevrons adjacents, **caractérisée en ce que** :
(iii) des feuilles de membrane (1) selon l'une quelconque des revendications 1 à 14 sont positionnées entre l'isolation thermique et les voliges et les contre-voliges de tuile prévues de manière classique, de sorte qu'au moins les bords horizontaux (23, 24) adjacents des feuilles de membrane (1) adjacentes sont superposés, avec les bords inférieurs (23) d'une feuille supérieure recouvrant les bords supérieurs (24) des feuilles inférieures pour proposer un (des) joint (s) par recouvrement perméable(s) à l'air, ouvert(s), non étanche(s).

20. Structure de bâtiment selon la revendication 19, **caractérisée en ce que** l'isolation thermique est relativement rigide, est montée sur les parties supérieures des chevrons, et la membrane (1) est posée sur une surface supérieure exposée de l'isolation.

21. Structure de bâtiment selon la revendication 19, **caractérisée en ce que** l'isolation thermique est montée entre les chevrons adjacents, et sous les parties supérieures des chevrons, avec des feuilles de volige de coffrage appliquées ensuite sur les parties supérieures des chevrons, et la membrane (1) est posée sur la surface supérieure exposée de la volige de coffrage.

22. Structure de bâtiment selon la revendication 19, **caractérisée en ce que** l'isolation thermique est montée entre des chevrons adjacents, et contiguë avec les parties supérieures des chevrons, et la membrane (1) est posée sur la surface supérieure exposée des chevrons et l'isolation.

23. Utilisation d'une membrane selon l'une quelconque des revendications 1 à 14, en tant que membrane d'isolation thermique/de prise d'air/d'aération dans une structure de toit, avec au moins un passage d'écoulement pour l'air et/ou la vapeur d'eau non limité autour des bords (23, 24) superposés des membranes (1) adjacentes.
